(19) **Europäisches Patentamt**
**European Patent Office**
**Office européen des brevets**

(11) **EP 1 910 478 B1**

(12) **EUROPÄISCHE PATENTSCHRIFT**

(45) Veröffentlichungstag und Bekanntmachung des Hinweises auf die Patenterteilung:
**09.02.2011 Patentblatt 2011/06**

(21) Anmeldenummer: **06840915.0**

(22) Anmeldetag: **26.07.2006**

(51) Int Cl.:
***C09D 5/36*** *(2006.01)* ***C09D 7/12*** *(2006.01)*

(86) Internationale Anmeldenummer:
**PCT/EP2006/007344**

(87) Internationale Veröffentlichungsnummer:
**WO 2007/054144 (18.05.2007 Gazette 2007/20)**

(54) **SYSTEM VON INTERFERENZPIGMENTEN**

SYSTEM OF INTERFERENCE PIGMENTS

SYSTÈME DE PIGMENTS D'INTERFÉRENCE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.08.2005 DE 102005037095**

(43) Veröffentlichungstag der Anmeldung:
**16.04.2008 Patentblatt 2008/16**

(73) Patentinhaber: **Merck Patent GmbH**
**64293 Darmstadt (DE)**

(72) Erfinder:
• **ROESLER, Michael**
**64354 Reinheim (DE)**
• **HUBER, Adalbert**
**64625 Bensheim (DE)**

(56) Entgegenhaltungen:
EP-A2- 1 045 014          WO-A-01/18127
WO-A2-2004/061012    DE-A1- 19 941 607
US-B1- 6 267 810

EP 1 910 478 B1

**Beschreibung**

Gegenstand der vorliegenden Erfindung ist ein System aus N Interferenzpigmenten, das sich dadurch auszeichnet, dass für jede gegebene Anzahl N die Bunttonwinkel $h_{u'v'}^i$ (i=1 bis N, wobei N≥3) den Farbgamut des Systems maximieren. Das System umfasst ein Sortiment farbstarker Interferenzpigmente und deren Abmischungen.

Glanz- oder Effektpigmente werden in vielen Bereichen der Technik eingesetzt, insbesondere im Bereich der Industrie- und Autolacke, der dekorativen Beschichtung, im Kunststoff, in Farben, Druckfarben sowie in kosmetischen Formulierungen.

Da Deckvermögen, Glanz und Farbe meist nicht mit einem einzigen Pigment in der Formulierung erzielt werden können, werden Pigmente häufig miteinander gemischt, wie z. B. in der DE 199 41 607 A1 und WO 2004/061012 A2 beschrieben. Die Anzahl der jeweiligen durch Interferenzpigmente zu realisierenden Eigenfarben ist in den Formulierungen in der Regel nicht ausreichend, so dass aus den kommerziell erhältlichen Pigmenten Mischungen hergestellt werden müssen um den Anforderungen der Designer nach möglichst vielen unterschiedlichen Farben gerecht zu werden. Aus wirtschaftlichen Gründen ist man aber dazu gezwungen mit möglichst wenig Pigmenten auszukommen. Es besteht somit ein Bedarf nach Effektpigmenten, die so beschaffen sind, dass aus ihnen möglichst viele Farben mischbar sind, wobei die dazu benötigte Anzahl an unterschiedlichen Pigmenttypen klein sein sollte.

Die messtechnische farbliche Charakterisierung von Effektpigmenten zur Qualitätssicherung oder zur Einschätzung der koloristischen Möglichkeiten bei der Abmischung mit typischen anderen Komponenten einer Lackformulierung wird dem Stand der Technik gemäß mittels Goniospektrometern an aus den Effektpigmenten gefertigten Mustern vorgenommen. Die resultierenden Spektren werden dann anhand von in Normen niedergelegten Referenzbedingungen (Art der Lichtquelle, Art des Beobachters, usw.) in Farbkoordinaten X, Y, Z, bzw. x, y, Y, bzw. L\*, a\* und b\* umgerechnet, die zur Bewertung sowohl des winkelabhängigen Farbverhaltens eines Effektpigments als auch zur Bewertung der Unterschiede zwischen zwei oder mehreren Effektpigmenten herangezogen werden. Im Bereich der Lacke und Farbenindustrie wird dabei das CIE L\*a\*b\* - Farbsystem bevorzugt, wobei die Umrechnung von x, y, Y auf L\*a\*b\* in der DIN-Norm DIN 5033 festgelegt ist. Aus dieser nichtlinearen Umrechnung folgt, dass die Eigenschaft der Additivität von Lichtfarben, welche im x, y, Y-System noch vorhanden ist, nun für das L\*a\*b\* - System nicht mehr zutrifft. Da sich aber die hier betrachteten transparenten Effektpigmente untereinander "wie Lichtfarben mischen" (additive Mischung) ist das L\*a\*b\*-System für die vorliegenden Optimierungsaufgaben nicht geeignet. Ein hierfür geeignetes Farbkoordinatensystem existiert jedoch mit den Farbkoordinaten u', v' und Y, welches

a) die Linearität der additiven Farbmischung aus dem System x, y, Y beibehält, und
b) eine gegenüber x, y, Y verbesserte empfindungsgemäße Gleichabständigkeit von Farbunterschieden aufweist.

Ein u'v'-Bunttonwinkel kann dann analog zum x, y-System als

$$h_{u'v'} = \arctan\left(\frac{v'-v'_n}{u'-u'_n}\right)$$

definiert werden, wobei $u'_n$ und $v'_n$ die Farbkoordinaten des Unbuntpunktes sind.

Die Sättigung $S_{u'v'}$ ist hier analog zum CIE L\*a\*b\*-Farbraum proportional der kartesischen Metrik

$$S_{u'v'} = 13\sqrt{(u'-u'_n)^2 + (v'-v'_n)^2}.$$

Aufgabe der vorliegenden Erfindung ist es daher, Interferenzpigmente zu finden, deren Abmischungen den größtmöglichen Farbgamut in der u', v'-Ebene des u', v', Y-Farbraums im CIELUV-System besitzen. Durch Auswahl und Herstellung von bunten Interferenzpigmenten mit genau definierten Farben soll erreicht werden, dass bei einem gegebenen System aus N Interferenzpigmenten der maximale Farbgamut erzielt wird. Um einen hinreichenden Farbeindruck zu erzielen, ist es Voraussetzung, dass der Wert δ = $S_{u'v'}$/13 der Einzelpigmente mindestens 0,05 erreicht, vorzugsweise 0,15 überschreitet.

Überraschenderweise wurde nun gefunden, dass ein System bestehend aus N Interferenzpigmenten mit definierten Bunttonwinkeln $h_{u'v'}^i$ (i=1 bis N, wobei N≥3) zu dem größtmöglichen Farbgamut führt, der überhaupt aus N Interferenzpigmenten aufgespannt werden kann.

Es liegt damit ein "Baukasten" von Interferenzpigmenten vor, deren wechselseitige Abmischung in variierender Zusammensetzung alle in einem durch diesen "Baukasten" definierten Farbraum möglichen Einzelfarben herzustellen erlaubt.

Gegenstand der Erfindung ist somit ein System aus N≥3 Interferenz-pigmenten, dadurch gekennzeichnet, dass es bei einem $C_{u'v'}$ von ≥ 0,05 der Einzelpigmente einen maximalen Farbgamut und die dafür optimalen Bunttonwinkel $h_{u'v'}^i$ (i=1 bis N) mit einer Toleranz von ± 2˚ im CIELUV-System aufweist, und die das Pigment enthaltende Lackschicht in der Meßgeometrie 45˚/120˚ die Farbtonwinkel- und Chromabereiche, wie in Anspruch 1 angegeben, aufweist.

Gegenstand der Erfindung sind auch farbstarke bunte Interferenzpigmente mit definierten Bunttonwinkeln und Chroma als Bestandteile des Systems aus N Interferenzpigmenten gemäß Anspruch 5.

Der Gamut einer definierten Auswahl von mehr als zwei Effektpigmenten ist der Bereich der Farbkoordinaten, der durch additive Mischung dieser Interferenzpigmente in einer Lackschicht bei einer gegebenen Beleuchtung (Winkel, Lichtart, Apertur) und Detektion (Winkel, Apertur) erreichbar ist. Da hier der Gamut als Polygonfläche in der u'v'-Ebene des u'v'Y-Systems verwendet wird, kommt es (im Gegensatz zum a*b*-Gamut) zu keiner Veränderung des Farbgamuts bei Variation der Lackschichtdicken d und/oder der Pigment-Massenkonzentration (PMK) der Effektpigmente im durch die Praxis vorgegebenen Bereich (d < 50 μm und PMK < 30 m%). Die Farbkoordinaten aller effektpigmentierten Lackschichten werden mit einer der durch die herkömmlichen goniometrischen Farbmeßtechnik bereitgestellten Geometrien vermessen.

Die hier verwendete 45˚/120˚ - Geometrie zur Vermessung der spektralen Zusammensetzung des reflektierten Lichtes ist deshalb bevorzugt, weil sie sowohl in den Satz der Messgeometrien nach ASTM E2194 und DIN 6175-2 und insofern bevorzugt für Metallics, als auch in den Satz der Farbmessgeometrien nach ASTM WK 1164 April 2006 und insofern bevorzugt für Interferenzpigmente eingeht. Sie ist in allen bisher verfügbaren Mehrwinkel-Farbmeßgeräten zur Vermessung von planaren Farbmustern realisiert.

Zur Vereinfachung, aber ohne Einschränkung der Allgemeinheit, seien hier immer Farbmuster gemeint, bei denen mit einer Pigment-Masse-Konzentration von 16,3 m%, einer Schichtdicke des Basislacks von 15 μm und einer pneumatischen Applikation sowohl des Basislacks als auch des darüber liegenden Klarlacks gearbeitet wird.

Alle Farborte von Effektpigmenten, die folgenden Bedingungen genügen: hochbrechendes transparentes Metalloxid / transparentes Substrat / hochbrechendes Metalloxid liegen im u'v' - System auf spiralförmigen, aber sich überschneidenden Kurven um den Unbuntpunkt. Die konvexe Einhüllende dieses Kurvenzugs E(u',v') charakterisiert die Menge der chromatischsten potentiell möglichen Effektpigmente für jeden existierenden Farbtonwinkel. Jede Mischung aus Effektpigmenten (die auf E(u',v') liegen) kann nur Farborte ergeben, die auf der Verbindungsgeraden zwischen diesen beiden Effektpigmenten liegen und somit wird E(u',v') durch den Flächeninhalt des Polygons $P(u'^i,v'^i)$ mit den N=3 bis i ersetzt.

Die Kurve E(u',v') "rotiert entgegen dem Uhrzeigersinn" beim Übergang von steilen zu flachen Beobachtungswinkeln für Messgeometrien mit gleichem Winkelabstand zum Glanz. Sie zieht sich um den Unbuntpunkt zusammen beim Übergang von glanznahen zu glanzfernen Beobachtungswinkeln, wenn die Beleuchtungsrichtung konstant bleibt.

Es wurde nun gefunden, dass jedoch die Form der Kurve E(u',v') für alle Messgeometrien so weitgehend erhalten bleibt, dass diejenigen Pigmente, die bei z.B. 45˚/120˚ [nach Bezeichnungsweise des ASTM draft Standard Practice for Multiangle Color Measurement of Materials Colored with Interference Pigments', 2004] optimale, d.h. den u',v' - Gamut maximierende $h_{u'v'}$-Farbtonwinkel aufweisen, auch diejenigen sind, die bei einer anderen Messgeometrie den maximalen Gamut ergeben; nun allerdings bei anderen Farbtonwinkeln.

Die Kurve E(u',v') für die vorliegenden Mehrfach-Schichtaufbauten (hochbrechendes transparentes Metalloxid (MeO) / transparentes Substrat / hochbrechendes transparentes Metalloxid) mit Schichtdickenvarianzen des Substrats > 100 nm kann theoretisch mit hinreichender Genauigkeit (ΔE < 1) aus den Interferenzkurven des Einschichtsystems abgeleitet werden. Die entsprechenden Formeln sind einschlägig bekannt (z.B. aus Vasicek, A., Optics of Thin Films, 1960, North Holland Pub. Comp., Amsterdam).

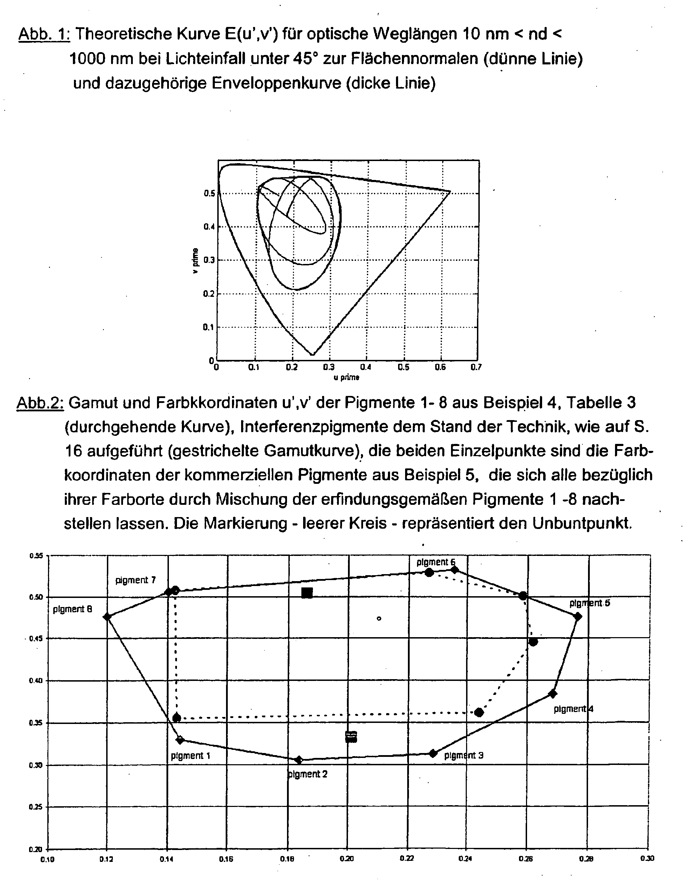

In partikulärer Systemen mit variierenden Interferenzeigenschaften von Effektpigmentteilchen zu Effektpigmentteilchen, sowie unterschiedlichen Orientierungen der Effektpigmentteilchen wird die uv-Buntheit $C_{u'v'}$ des idealen unendlich ausgedehnten Schichtaufbaus zumeist nicht erreicht, obwohl die Gestalt der Kurve E(u',v'), wie anhand von praktischen Belegungskurven von Pigmenten kontrolliert werden kann, erhalten bleibt. Für aus der flüssigen Phase auf Glimmer abgeschiedene Titandioxid-Beschichtungen wird stellvertretend für alle Systeme: MeO / transparentes Substrat mit Schichtdickenstandardabweichungen > 100 nm / MeO, die in Abb.1 dargestellte Kurve E(u',v') als theoretische und praktische Grenzkurve (Envelloppe) ermittelt. Alle ermittelten u'v'-Farborte von Mustern aus Interferenzpigmenten mit beliebiger Einstellung der optischen Dicke des Metalloxides in Beschichtungen (vermessen in der Meßgeometrie 45˚/120˚ auf einem absorbierenden Untergrund) sind also innerhalb der Kurve E(u',v') oder einer kongruenten Kurve mit reduzierter uv-Buntheit aufzufinden.

Die Gestalt der Envelloppenkurve E(u',v') (siehe Abb. 1) ist Grundlage einer Optimierungsprozedur zur Auswahl günstiger "Abstellwinkel" von Effektpigmenten $h_{u'v'}^i$ (i=1 bis N mit N≥3).

Auf diese Weise hat man danach nun die Möglichkeit eine Anzahl N von Pigmenten auf der Envelloppenkurve zu positionieren und damit ein System von Interferenzpigmenten zu schaffen, welches einem von beiden genannten Kriterien genügt:

a) die maximale u'v'-Fläche des 2-dimensionalen Polygons der gewählten Pigmente aufweist, oder

b) das maximale u'v'Y-Volumen des 3-dimensionalen Polyeders der gewählten Pigmente aufweist.

Da letzteres Kriterium nicht unabhängig von den gewählten Pigment-Einsatzkonzentrationen sowie den Stoffkonstanten der Pigmente ist, wird nach a) eine Optimierung vorgenommen, bei dem der Flächeninhalts aller potentiell möglicher Polygone $P(u'^i, v'^i)$ entsprechend den u',v'-Farbwertanteilen der Enveloppenkurve $E(u',v')$ (und damit der $h_{u'v'}$-Farbtonwinkel) im u'v'-System numerisch maximiert wird und für N=3 bis 8 die dafür notwendigen optimalen $h_{u'v'}$-Farbtonwinkel bestimmt werden.

Auf diese Weise erhält man die u',v'-Koordination der Farborte für Interferenzpigmente, die alleine oder durch Abmischung die größtmögliche Anzahl von Farben mit der kleinstmöglichen Zahl von Pigmenten ermöglichen.

Erfindungsgemäße Pigmente besitzen folgende Farbtonbereiche (Purton auf schwarz, in 45°/120° Farbmeß-Geometrie [nach Bezeichnungsweise des ASTM draft Standard ‚Practice for Multiangle Color Measurement of Materials Colored with Interference Pigments', 2004], pneumatische Spritzapplikation):

Tabelle 1:

| | | |
|---:|:---:|:---|
| -127,3 | > $h_{uv}$ > | -133,3 |
| -112,2 | > $h_{uv}$ > | -118,2 |
| -96,4 | > $h_{uv}$ > | -102,4 |
| - 81,1 | > $h_{uv}$ > | -87,1 |
| -67,4 | > $h_{uv}$ > | -73,4 |
| -55,6 | > $h_{uv}$ > | -61,6 |
| -29,5 | > $h_{uv}$ > | -35,5 |
| -9,8 | > $h_{uv}$ > | -15,8 |
| -3,4 | > $h_{uv}$ > | -9,4 |
| 3,2 | > $h_{uv}$ > | -2,8 |
| 52,8 | > $h_{uv}$ > | 46,8 |
| 67,7 | > $h_{uv}$ > | 61,7 |
| 157,1 | > $h_{uv}$ > | 151,1 |
| 163,6 | > $h_{uv}$ > | 157,6 |
| 169,8 | > $h_{uv}$ > | 163,8 |
| 183,0 | > $h_{uv}$ > | 177,0 |

Insbesondere sind bunte Interferenzpigmente aus folgenden Farbtonwinkel- und Chromabereichen zur Herstellung von Pigmentgemischen aus N Pigmenten

(mit $\delta = S_{u'v'}/13 = \sqrt{(u'-u'_n)^2 + (v'-v'_n)^2}$ ) bevorzugt:

Tabelle 2:

| | | | | | |
|---:|:---:|---:|:---:|:---|:---|
| -127,3 | > $h_{uv}$ > | -133,3 | und | $C_{uv}$ > 0,05 | für N = 6 |
| -112,2 | > $h_{uv}$ > | -118,2 | und | $C_{uv}$ > 0,14 | für N = 4, 5, 7, 8 |
| -112,2 | > $h_{uv}$ > | -116,6 | und | $C_{uv}$ > 0,05 | für N = 4, 5, 7, 8 |
| -96,4 | > $h_{uv}$ > | -102,4 | und | $C_{uv}$ > 0,05 | für N = 3, 6, 8 |
| - 81,1 | > $h_{uv}$ > | -87,1 | und | $C_{uv}$ > 0,125 | für N = 5, 7, 8 |
| - 81,1 | > $h_{uv}$ > | -86,7 | und | $C_{uv}$ > 0,05 | für N = 5, 7, 8 |
| -67,4 | > $h_{uv}$ > | -73,4 | und | $C_{uv}$ > 0,12 | für N = 4, 6 |
| -67,4 | > $h_{uv}$ > | -72,7 | und | $C_{uv}$ > 0,05 | für N = 4, 6 |
| -55,6 | > $h_{uv}$ > | -61,6 | und | $C_{uv}$ > 0,05 | für N = 7,8 |
| -29,5 | > $h_{uv}$ > | -35,5 | und | $C_{uv}$ > 0,05 | für N = 5 |
| -9,8 | > $h_{uv}$ > | -15,8 | und | $C_{uv}$ > 0.062 | für N = 6 |
| -9,8 | > $h_{uv}$ > | -12,7 | und | $C_{uv}$ > 0,05 | für N = 6 |
| -3,4 | > $h_{uv}$ > | -9,4 | und | $C_{uv}$ > 0,057 | für N = 7, 8 |
| -3,4 | > $h_{uv}$ > | -7,8 | und | $C_{uv}$ > 0,05 | für N = 7, 8 |
| 3,2 | > $h_{uv}$ > | -2,8 | und | $C_{uv}$ > 0,05 | für N = 3 |
| 52,8 | > $h_{uv}$ > | 46,8 | und | $C_{uv}$ > 0,05 | für N = 4 |

(fortgesetzt)

| | | | | | |
|---|---|---|---|---|---|
| 67,7 | $> h_{uv} >$ | 61,7 | und | $C_{uv} > 0{,}05$ | für N = 5, 6, 7, 8 |
| 157,1 | $> h_{uv} >$ | 151,1 | und | $C_{uv} > 0{,}076$ | für N = 7, 8 |
| 157,1 | $> h_{uv} >$ | 153,9 | und | $C_{uv} > 0{,}05$ | für N = 7, 8 |
| 163,6 | $> h_{uv} >$ | 157,6 | und | $C_{uv} > 0{,}05$ | für N = 3, 4, 6 |
| 169,8 | $> h_{uv} >$ | 163,5 | und | $C_{uv} > 0{,}05$ | für N = 5 |
| 183,0 | $> h_{uv} >$ | 177,0 | und | $C_{uv} > 0{,}05$ | für N = 7,8 |

Vorzugsweise werden 3 bis 20 Interferenzpigmente (N = 3 - 20) als Eckpunkte einer Mischung ausgewählt. Ganz besonders bevorzugt ist N = 4 -12, und insbesondere N = 5 - 8, wobei die optimalen Bunttonwinkel naturgemäß von der Anzahl der auszuwählenden Interferenzpigmente abhängen.

Geeignete Pigmente sind insbesondere Interferenzpigmente, die auf plättchenförmigen transparenten Substraten basieren. Bevorzugte Substrate sind Schichtsilikate. Insbesondere geeignet sind natürlicher und/oder synthetischer Glimmer, plättchenförmige Aluminium-Oxide, Glas-, $SiO_2$- $TiO_2$-, synthetische trägerfreie Plättchen, BiOCl oder andere vergleichbare Materialien. Die Glas-, $Al_2O_3$- und $SiO_2$-Plättchen können auch dotiert sein.

Es können auch Gemische unterschiedlicher Substrate oder Gemische gleicher Substrate mit unterschiedlichen Partikelgrößen eingesetzt werden. Die Substrate können in jedem Massen-Verhältnis miteinander gemischt werden. Vorzugsweise werden 10 : 1 bis 1 : 10-Gemische eingesetzt, insbesondere 1 : 1-Gemische. Besonders bevorzugt sind Substratgemische bestehend aus Glimmerplättchen mit unterschiedlichen Partikelgrößen, insbesondere Gemische aus N-Glimmer (< 60 $\mu$m) und F-Glimmer (< 25 $\mu$m).

Die Größe der Basissubstrate ist an sich nicht kritisch und kann auf den jeweiligen Anwendungszweck abgestimmt werden.

In der Regel haben die plättchenförmigen Substrate eine Dicke zwischen 0,05 und 5 $\mu$m, insbesondere zwischen 0,1 und 1 $\mu$m. Die Ausdehnung in den beiden anderen Bereichen beträgt üblicherweise zwischen 1 und 250 $\mu$m, vorzugsweise zwischen 2 und 200 $\mu$m, und insbesondere zwischen 5 und 60 $\mu$m.

Die Dicke mindestens einer einzelnen Schicht auf dem Basissubstrat ist wesentlich für die optischen Eigenschaften des Pigments. Das Pigment muss mindestens eine optisch aktive Schicht aufweisen, vorzugsweise eine hochbrechende Schicht. Unter hochbrechenden Schichten sind hier alle Schichten zu verstehen, die einen Brechungsindex von n > 1,8, vorzugsweise von $n \geq 2{,}0$, besitzen.

Die optische Schicht besteht vorzugsweise aus $TiO_2$, $ZrO_2$, $SnO_2$, ZnO, bzw. Gemische oder Kombinationen davon. Die Schicht kann undotiert oder dotiert sein. Geeignete Dotiermittel sind z.B. Erdalkalimetalle bzw. deren Verbindungen, insbesondere Calcium und Magnesium. Der Anteil der Dotierung beträgt in der Regel maximal 5 Gew.% bezogen auf die jeweilige Schicht.

Besonders bevorzugt handelt es sich bei der optischen Schicht um eine farblose Schicht, insbesondere um eine $TiO_2$-Schicht Das $TiO_2$ kann dabei in der Rutil- und in der Anatasmodifikation vorliegen, vorzugsweise handelt es sich um Rutil.

Die Dicke der optisch aktiven Schicht beträgt vorzugsweise 30 bis 350 nm, insbesondere 50 bis 250 nm.

Besonders bevorzugte Interferenzpigmente werden nachfolgend genannt:

Glimmer-Plättchen + $TiO_2$
Glimmer-Plättchen + $ZrO_2$
$SiO_2$-Plättche + $TiO_2$
$SiO_2$-Plättchen + $ZrO_2$
$Al_2O_3$-Plättchen + $TiO_2$
$Al_2O_3$-Plättchen + $ZrO_2$
Glas-Plättchen + $TiO_2$
Glas-Plättchen + $ZrO_2$
Glas-Plättchen + $SiO_2$ + $TiO_2$

Geeignete Interferenzpigmente sind ebenfalls Mehrschichtpigmente, sofern sie mindestens eine und maximal zwei identische optisch aktive Schichten aufweisen. Insbesondere bevorzugt sind Mehrschichtpigmente, die eine Schichtenfolge $TiO_2$ - $SiO_2$ (optisch inaktive Schicht) - $TiO_2$ aufweisen. Derartige Pigmente sind z.B. bekannt aus der EP 0 882 099 B1. Bei den optisch inaktiven Schichten handelt es sich in der Regel um $SiO_2$- und/oder $Al_2O_3$-Schichten mit Schichtdicken von < 10 nm, vorzugsweise < 5 nm. Zudem können die Pigmente noch weitere Hilfsschichten oberhalb oder unterhalb der Interferenzschicht enthalten, z.B. zur Steuerung der Rutilisierung, des Kornwachstums oder zur Hemmung der Photoaktivität.

Die Herstellung von Interferenzpigmenten ist vielfach in der Literatur beschrieben und dem Fachmann bekannt.

Die Metalloxidschichten werden vorzugsweise nasschemisch aufgebracht, wobei die zur Herstellung von Perlglanzpigmenten entwickelten nasschemischen Beschichtungsverfahren angewendet werden können. Derartige Verfahren sind z.B. beschrieben in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren dem Fachmann bekannten Patentdokumenten und sonstigen Publikationen.

Bei der Nassbeschichtung werden die Substratpartikel in Wasser suspendiert und mit einem oder mehreren löslichen Metallsalzen bei einem für die Hydrolyse geeigneten pH-Wert versetzt, der so gewählt wird, dass die Metalloxide bzw. Metalloxidhydrate direkt auf den Plättchen ausgefällt werden, ohne dass es zu Nebenfällungen kommt. Der pH-Wert wird üblicherweise durch gleichzeitiges Zudosieren einer Base oder Säure konstant gehalten. Anschließend werden die Pigmente abgetrennt, gewaschen und getrocknet und gegebenenfalls geglüht, wobei die Glühtemperatur in Hinblick auf die jeweils vorliegende Beschichtung optimiert werden kann. In der Regel liegen die Glühtemperaturen zwischen 250 und 1000 ˚C, vorzugsweise zwischen 350 und 900 ˚C. Falls gewünscht können die Pigmente nach Aufbringen einzelner Beschichtungen abgetrennt, getrocknet und ggf. geglüht werden, um dann zur Auffällung der weiteren. Schichten wieder resuspendiert zu werden.

Weiterhin kann die Beschichtung auch in einem Wirbelbettreaktor durch Gasphasenbeschichtung erfolgen, wobei z.B. die in EP 0 045 851 und EP 0 106 235 zur Herstellung von Perlglanzpigmenten vorgeschlagenen Verfahren entsprechend angewendet werden können.

Die Farbe der Pigmente kann in weiten Grenzen durch unterschiedliche Wahl der Belegungsmengen bzw. der daraus resultierenden Schichten variiert werden. Die Feinabstimmung für einen bestimmten Farbton kann über die reine Mengenwahl hinaus durch visuell oder messtechnisch kontrolliertes Anfahren der gewünschten Farbe erreicht werden. Die Optimierung von Farbort und Chroma der Interferenzpigmente erfolgt über die Dicke der aufgefällten Schichten sowie durch die Auswahl geeigneter Fällungsparameter. Verfahren dazu sind dem Fachmann bekannt. Höhere Chroma der Interferenzpigmente lassen sich auch durch die in der EP 0 882 099 beschriebenen Mehrschichtaufbauten erreichen.

Zur Erhöhung der Licht-, Wasser- und Wetterstabilität empfiehlt es sich häufig in Abhängigkeit vom Einsatzgebiet, die Interferenzpigmente einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017, DE-A 33 34 598, DE 40 30 727 A1, EP 0 649 886 A2, WO 97/29059, WO 99/57204, U.S. 5,759,255 beschriebenen Verfahren in Frage. Durch diese Nachbeschichtung wird die chemische Stabilität der Pigmente weiter erhöht oder die Handhabung des Pigments, insbesondere die Einarbeitung in unterschiedliche Medien, erleichtert. Zur Verbesserung der Benetzbarkeit, Dispergierbarkeit und/oder Verträglichkeit mit den Anwendungsmedien können funktionelle Beschichtungen aus $Al_2O_3$ oder $ZrO_2$ oder deren Gemische bzw. Mischphasen auf die Pigmentoberfläche aufgebracht werden. Weiterhin sind organische bzw. organisch/anorganisch kombinierte Nachbeschichtungen möglich, z.B. mit Silanen, wie beispielsweise beschrieben in EP 0090259, EP 0 634 459, WO 99/57204, WO 96/32446, WO 99/57204, U.S. 5,759,255, U.S. 5,571,851, WO 01/92425 oder in J.J. Ponjeé, Philips Technical Review, Vol. 44, No. 3, 81 ff. und P.H. Harding J.C. Berg, J. Adhesion Sci. Technol. Vol. 11 No. 4, S. 471-493.

Das erfindungsgemäße Pigment-System kann nach jedem der genannten Verfahren hergestellt werden, indem darauf geachtet wird, dass die optisch aktiven Schichten nach Fertigstellung des Pigments (also nach Kalzinierung und Oberflächenmodifikation) einen der Farbtonwinkel aus Tabelle 1 oder 2 aufweisen.

Das erfindungsgemäße Pigmentsystem bzw. -gemisch ist mit einer Vielzahl von Farbsystemen kompatibel, vorzugsweise aus dem Bereich der Lacke, Farben und Druckfarben. Für die Herstellung der Lacke, Pulverlacke, Farben, Druckfarben ist eine Vielzahl von Bindern geeignet. Die Bindemittel können auf Wasserbasis oder Lösemittelbasis aufgebaut sein.

Das erfindungsgemäße Pigmentsystem ist weiterhin geeignet zur Herstellung von fließfähigen Pigmentpräparationen und Trockenpräparaten. Die Pigmentpräparationen und Trockenpräparate zeichnen sich dadurch aus, dass sie das erfindungsgemäße Pigmentsystem, Bindemittel und optional ein oder mehrere Additive enthalten.

Das erfindungsgemäße Interferenzpigment kann zur Pigmentierung von Lacken, Druckfarben, Kunststoffen, Agrarfolien, Saatgutbeschichtung, Lebensmitteleinfärbungen, Knopfpasten, Arzneimittelüberzügen oder kosmetischen Formulierungen verwendet werden. Die Konzentration der Pigmentmischung im zu pigmentierenden Anwendungssystem liegt in der Regel zwischen 0,1 und 70 Gew.%, vorzugsweise zwischen 0,1 und 50 Gew.% und insbesondere zwischen 0,5 und 10 Gew.%, bezogen auf den Gesamtfestkörpergehalt des Systems. Sie ist in der Regel abhängig vom konkreten Anwendungsfall.

Im Lackbereich, insbesondere im Automobillack oder im Autoreparaturlackbereich, wird das erfindungsgemäße Pigmentsystem, auch für 3-Schichtaufbauten in Mengen von 0,1-10 Gew.%, vorzugsweise 1 bis 3 Gew.%, eingesetzt.

Es versteht sich von selbst, dass für die verschiedenen Anwendungszwecke das erfindungsgemäße Pigmentsystem auch vorteilhaft in Abmischung mit organischen Farbstoffen, organischen Pigmenten oder anderen Pigmenten, wie z.B. transparenten und deckenden Weiß-, Bunt- und Schwarzpigmenten eingesetzt werden kann. Das System kann in jedem Massen-Verhältnis mit diesen handelsüblichen Pigmenten und Füllern gemischt werden.

Gegenstand der Erfindung sind somit auch Formulierungen enthaltend das erfindungsgemäße Pigmentsystem.

Weitere Ausführungsformen dieser Erfindung sind den Beispielen und den Ansprüchen zu entnehmen.

Die nachfolgenden Beispiele sollen die Erfindung erläutern, ohne sie jedoch zu begrenzen.

## **Beispiele**

Herstellung der Interferenzpigmente

Beispiel 1: Einschichtpigment

Eine Suspension von 100 g gemahlenem und klassiertem Glimmer der Teilchengröße 10-60 $\mu$m in 2 l Wasser werden bei 75 ˚C innerhalb einer Stunde mit 60 ml einer wässrigen Lösung von 3 g $SnCl_4 \cdot 5\ H_2O$ und 10 ml konz. Salzsäure versetzt, wobei durch gleichzeitige Zugabe von verdünnter Natronlauge ein pH-Wert von 1,8 eingehalten wird. Anschließend wird eine wässrige 20 Gew.%ige TiCl4-Lösung zugegeben, wobei mit verdünnter Natronlaufe ein pH-Wert von 1,6 eingehalten wird.

Nach Erreichen einer grünen Interferenzfarbe wird ca. eine halbe Stunde nachgerührt, das Pigment abgetrennt, mit Wasser salzfrei gewaschen, getrocknet und 30 Minuten bei 850 ˚C geglüht.

Durch Anfahren definierter Abstellpunkte über die aufgefällte $TiO_2$-Meng lassen sich weitere bunte Interferenzpigmente nach dieser Methode herstellen.

Beispiel 2: Mehrschichtpigment mit optisch inaktiver Schicht

100 g Glimmer der Teilchengröße 10-60 $\mu$m werden in 2 l vollentsalztern Wasser suspendiert. Die auf 75 ˚C erhitzte Suspension wird mit verdünnter Salzsäure auf pH=1,8 eingestellt. Anschließend wird durch Zugabe von 3,3 ml/min $SnCl_4$-Lösung (hergestellt aus 2,2 g $SnCl_4$ und 0,75 g konz. Salzsäure in 100 ml vollentsalztem Wasser) mit $SnO_2$ beschichtet. Der pH-Wert wird dabei mit 32 %iger Natronlauge konstant gehalten. Anschließend wird 15 min nachgerührt und bei pH=1,8 und 75 ˚C eine $TiCl_4$-Lösung (400 g $TiCl_4$/l) zugegeben, wobei der pH-Wert mit 32 %iger Natronlauge konstant gehalten wird. Nach Erreichen des Farbendpunktes Grün II. Ordnung wird die Belegung unterbrochen, 15 min nachgerührt und nach Einstellung von pH = 8,0 mit verdünnter Natronlauge weitere 10 min nachgerührt.

Anschließend erfolgt die Beschichtung mit $SiO_2$ durch Zugabe von 3 ml/min Natronwasserglaslösung (hergestellt aus 7,3 g Natronwasserglas mit 27 % $SiO_2$ und 80 ml vollentsalztem Wasser) ohne pH-Kompensation. Nach Beendigung wird 15 min nachgerührt, mit verdünnter Salzsäure erneut der pH-Wert auf 1,8 eingestellt und durch Zugabe von $SnCl_4$- und $TiCl_4$-Lösung, wie oben beschrieben, die zweite $TiO_2$-Schich aufgefällt. Nach Erreichen des Vergteichsendpunktes Grün III. Ordnung wird die Belegung abgebrochen, 15 min nachgerührt und anschließend das Pigment abgesaugt, gewaschen, getrocknet und 30 min bei 850 ˚C geglüht.

Das erhaltene Mehrschichtpigment besitzt eine intensiv grüne Interferenzfarbe.

Beispiel 3: Herstellung eines Systems aus Interferenzpigmenten (mit N=3) mit einem maximierten Farbgamut durch Wahl der optimalen Pigmentfarbtonwinkel $h_{u'v'}$

Gemäß den Herstellungsbeispielen 1 und 2 werden je ein Interferenzpigment hergestellt, welches dem geforderten $h_{u'v'}$ im roten, blauen und grünen Farbtonwinkeibereich entspricht [naßchemische Fällung Rutil auf Glimmer]. Eine ca. 16 m % dieses Pigments enthaltende, pneumatisch applizierte und 15 $\mu$m dicke Lackschicht auf schwarzem Untergrund ergibt bei farbmetrischer Vermessung in 45˚/120˚ Geometrie folgende Farbwertanteile u' und v':

|  | u' | v' | hu'v' |
|---|---|---|---|
| Rot-Kupfer Typ nach Beispiel 1 | 0,267 | 0,4766 | 2,9 |
| Blau Typ nach Beispiel 1 | 0,1791 | 0,3049 | -100,5 |
| Grün Typ nach Beispiel 2 | 0,1407 | 0.5043 | 156,3 |
| Gamut |  |  | **0,0121** |

Im Vergleich dazu die im Handel erhältlichen Interferenz-Pigmente der Fa. Merck KGaA (Stand der Technik)

|  | u' | v' | hu'v' |
|---|---|---|---|
| Iriodin® 9215 WR Rutile Red Pearl | 0,2636 | 0,4663 | -7,9 |
| Iriodin® 9225 Rutil Perlblau WR | 0,1427 | 0,3702 | -123,3 |

(fortgesetzt)

|  | u' | v' | hu'v' |
|---|---|---|---|
| Iriodin® 9235 Rutil Perlqrün WR | 0,1684 | 0,4915 | 157,0 |
| Gamut | | | **0,0061** |

Die Annäherung an die optimierten Farbtonwinkel (obere Tabelle) ergibt eine signifikante Vergrößerung des Farbgamuts gegenüber drei kommerziellen Interferenz-Pigmenten.

Beispiel 4: Herstellung eines Systems aus 8 Interferenzpigmenten mit einem maximierten Farbgamut durch Wahl der optimalen Pigmentfarbtonwinkel $h_{u'v'}$

Nach dem Herstellverfahren 1 oder 2 werden die folgenden bunten, auf Farbort und Chroma optimierten, Interferenzpigmente aus den Farbbereichen blau, Indigo, violet, lila, rot, gelb, türkis und grün synthetisiert:

Tabelle 3:

|  | Herstellverfahren | u' | v' | Hue(u'v') | δ | Optische Schichtdicke | Farbbereich |
|---|---|---|---|---|---|---|---|
| Pigment 1 | 2 | 0,1444 | 0,3292 | -114,61 | 0,3595 | 340,0 | blau |
| Pigment 2 | 2 | 0,1837 | 0,3052 | -99,06 | 0,3562 | 319,2 | Indigo |
| Pigment 3 | 2 | 0,2284 | 0,3128 | -83,65 | 0,3873 | 302,0 | violet |
| Pigment 4 | 1 | 0,2682 | 0,3839 | -57,26 | 0,4683 | 287,7 | lila |
| Pigment 5 | 1 | 0,2765 | 0,4766 | 2,52 | 0,5510 | 273,0 | rot |
| Pigment 6 | 1 | 0,2355 | 0,5325 | 67,02 | 0,5822 | 224,0 | gelb |
| Pigment 7 | 2 | 0,1403 | 0,5061 | 155,17 | 0,5252 | 412,0 | türkis |
| Pigment 8 | 2 | 0,1201 | 0,4762 | 178,36 | 0,4912 | 425,0 | grün |

Entsprechend ihrer Farbtonwinkel $h_{u'v'}$ sind die Bestandteile der in Tabelle 1 und 2 genannten optimierten Farbtonwinkel für das System aus 8 Pigmenten.

Die Farborte und die daraus resultierende Gamut-Kurve dieses Systems aus 8 Interferenzpigmenten sind in Abbildung 2 dargestellt.

Beispiel 5 (Vergleichsbeispiel):

Handelsübliche farbstarke Interferenz-Pigmente aus dem Stand der Technik (Hersteller: Fa. Merck KGaA) weisen bei gleicher Mustererstellung und farbmetrischer Vermessung folgende Charakteristika auf:

| Pigmentbezeichnung | u' | v' | Hue(u'v') | δ |
|---|---|---|---|---|
| Iriodin® 97219 Ultra Rutile Lilac Pearl SW | 0,2445 | 0,3615 | -73,15 | 0,4364 |
| iriodin® 97205 Ultra Rutile Platinum Gold WR | 0,2270 | 0,5285 | 73,29 | 0,5752 |
| Iriodin® 97225 Ultra Rutile Blue Pearl WR 11 | 0,1433 | 0,3547 | -119,47 | 0,3825 |
| Iriodin® 97215 Ultra Rutile Red Pearl WR II | 0,2619 | 0,4455 | -28,75 | 0,5168 |
| Iriodin® 97217 Ultra Rutile Copper WR II | 0.2584 | 0.5009 | 29,62 | 0,5636 |
| Iriodin® 97235 Ultra Rutile Green Pearl WR II | 0,1426 | 0,5078 | 153,33 | 0,5274 |

Die Farborte dieser Pigmente (dargestellt in Abb. 2 - gestrichelt) liegen alle innerhalb der durch die erfindungsgemäßen Pigmente aufgespannten Gamutkurve (in Abb. 2 - schwarze Punkte). Daraus folgt, dass durch die Kombination einer Anzahl erfindungsgemäßer Pigmente die Pigmente aus dem Stand der Technik nachzustellen sind.
Beispielhaft werden zwei weitere handelsübliche farbstarke Pigmente im lila- und grün-Farbbereich vermessen:

| Pigmentbezeichnung | u' | v' | Hue(u'v') | δ |
|---|---|---|---|---|
| DongZhu, TR235 green | 0,1859 | 0,5044 | 128,67 | 0,5376 |
| Engelhard, Super Violet 5303 Z | 0,2011 | 0,3320 | -93,81 | 0,3882 |

Die Farborte dieser beiden Pigmente liegen alle innerhalb der durch die erfindungsgemäßen Pigmente aufgespannten Gamutkurve (in Abb. 2 -schwarze Quadrate).

Das Pigment Violet (Engelhard, Super Violet 5303 Z) ist nicht durch die Kombination einer beliebigen Anzahl von Pigmenten aus dem Stand der Technik nachzustellen, da es außerhalb des entsprechenden Gamuts liegt (Abb.2). Demgegenüber ist durch die Pigmente des Satzes aus Tabelle 3 eine solche Nachstellung sogar durch mehrere Pigmentmischungen erreichbar.

Da der Gamut der Pigmente des Satzes aus Tabelle 3 den Gamut der Pigmente aus dem Stand der Technik beinhaltet und überschreitet, ist jeder durch diese Pigmente nachstellbare Farbort ebenfalls durch Kombinationen der Pigmente aus Tabelle 3 nachstellbar.

Die Beispiele zeigen darüber hinaus, dass mit den erfindungsgemäßen Pigmenten durch Mischung Farborte erreicht werden können, die mit Pigmenten aus dem Stand der Technik nicht darstellbar sind.

**Patentansprüche**

1. System aus N ≥ 3 Interferenzpigmenten, **dadurch gekennzeichnet, dass** die Interferenzpigmente bei einem $C_{u'v'}$ von ≥ 0,05 und einem Pigmentfarbtonwinkel $h_{u'v'}^i$ (i=1 bis N) einen maximalen Farbgamut des Systems aufweisen, und die das Pigment enthaltende Lackschicht in der Meßgeometrie 45°/120° folgende Farbtonwinkel- und Chromabereiche aufweist:

$$h_{u'v'} = \arctan\left(\frac{v'-v'_n}{u'-u'_n}\right) \qquad \delta = S_{u'v'}/13$$

| | | | | | |
|---|---|---|---|---|---|
| -127,3 | > $h_{uv}$ > | -133,3 | und | $C_{uv}$ > 0,05 | für N = 6 |
| -112,2 | > $h_{uv}$ > | -118,2 | und | $C_{uv}$ > 0,14 | für N = 4, 5, 7, 8 |
| -112,2 | > $h_{uv}$ > | -116,6 | und | $C_{uv}$ > 0,05 | für N = 4, 5, 7, 8 |
| -96,4 | > $h_{uv}$ > | -102,4 | und | $C_{uv}$ > 0,05 | für N = 3, 6, 8 |
| -81,1 | > $h_{uv}$ > | -87,1 | und | $C_{uv}$ > 0,125 | für N = 5, 7, 8 |
| - 81,1 | > $h_{uv}$ > | -87,1 | und | $C_{uv}$ > 0,05 | für N = 5, 7, 8 |
| -67,4 | > $h_{uv}$ > | -73,4 | und | $C_{uv}$ > 0,12 | für N = 4, 6 |
| -67,4 | > $h_{uv}$ > | -72,7 | und | $C_{uv}$ > 0,05 | für N = 4, 6 |
| -55,6 | > $h_{uv}$ > | -61,6 | und | $C_{uv}$ > 0,05 | für N = 7,8 |
| -29,5 | > $h_{uv}$ > | -35,5 | und | $C_{uv}$ > 0,05 | für N = 5 |
| -9,8 | > $h_{uv}$ > | -15,8 | und | $C_{uv}$ > 0,062 | für N = 6 |
| -9,8 | > $h_{uv}$ > | -12,7 | und | $C_{uv}$ > 0,05 | für N = 6 |
| -3,4 | > $h_{uv}$ > | -9,4 | und | $C_{uv}$ > 0,057 | für N = 7, 8 |
| -3,4 | > $h_{uv}$ > | -7,8 | und | $C_{uv}$ > 0,05 | für N = 7, 8 |
| 3,2 | > $h_{uv}$ > | -2,8 | und | $C_{uv}$ > 0,05 | für N = 3 |
| 52.8 | > $h_{uv}$ > | 46,8 | und | $C_{uv}$ > 0,05 | für N = 4 |
| 67,7 | > $h_{uv}$ > | 61,7 | und | $C_{uv}$ > 0,05 | für N = 5, 6, 7, 8 |
| 157,1 | > $h_{uv}$ > | 151,1 | und | $C_{uv}$ > 0,076 | für N = 7, 8 |
| 157,1 | > $h_{uv}$ > | 153,9 | und | $C_{uv}$ > 0,05 | für N = 7, 8 |
| 163,6 | > $h_{uv}$ > | 157,6 | und | $C_{uv}$ > 0,05 | für N = 3, 4, 6 |
| 169,8 | > $h_{uv}$ > | 163,8 | und | $C_{uv}$ > 0,05 | für N = 5 |
| 183,0 | > $h_{uv}$ > | 177,0 | und | $C_{uv}$ > 0,05 | für N = 7,8 |

2. System aus N ≥ 3 Interferenzpigmenten nach Anspruch 1, **dadurch gekennzeichnet, dass** die Interferenzpigmente auf plättchenförmigen Substraten basieren.

**3.** System aus N $\geq$ 3 Interferenzpigmenten nach Anspruch 1 oder 2, **dadurch gekennzeichnet, dass** es sich bei den Substraten um natürliche oder synthetische Glimmerplättchen, undotierte oder dotierte $SiO_2$-Plättchen, undotierte oder dotierte $Al_2O_3$-Plättchen, undotierte oder dotierte Glas-Plättchen handelt.

**4.** System aus N$\geq$ 3 Interferenzpigmenten nach einem oder mehreren der Ansprüche 1 bis 3, **dadurch gekennzeichnet, dass** es sich bei den Interferenzpigmenten um mit $TiO_2$ beschichtete Plättchen handelt.

**5.** Bunte Interferenzpigmente enthaltend ein oder mehrere farblose Metalloxidschichten auf einem transparenten Substrat, **dadurch gekennzeichnet, dass** die das Pigment enthaltende Lackschicht in der Messgeometrie 45/120˚ einen der folgenden Farbtonwinkel und Chroma aufweist:

$$h_{u'v'} = \arctan \left(\frac{v'-v'_n}{u'-u'_n}\right) \qquad \delta = S_{u'v}/13$$

| | | | | |
|---|---|---|---|---|
| -127,3 | > h$_{uv}$ > | -133,3 | und | δ > 0,05 |
| -112,2 | > h$_{uv}$ > | -118,2 | und | δ > 0,14 |
| -112,2 | > h$_{uv}$ > | -116,6 | und | δ > 0,05 |
| -96,4 | > h$_{uv}$ > | -102,4 | und | δ > 0,05 |
| - 81,1 | > h$_{uv}$ > | -87,1 | und | δ > 0,125 |
| - 81,1 | > h$_{uv}$ > | -87,1 | und | δ > 0,05 |
| -67,4 | > h$_{uv}$ > | -73,4 | und | δ > 0,12 |
| -67,4 | >h$_{uv}$ > | -72,7 | und | δ > 0,05 |
| -55,6 | > h$_{uv}$ > | -61,6 | und | δ > 0,05 |
| -29,5 | > h$_{uv}$ > | -35,5 | und | δ > 0,05 |
| -9,8 | > h$_{uv}$ > | -15,8 | und | δ > 0,062 |
| -9,8 | > h$_{uv}$ > | -12,7 | und | δ > 0,05 |
| -3,4 | > h$_{uv}$ > | -9,4 | und | δ > 0,057 |
| -3,4 | > h$_{uv}$ > | -7,8 | und | δ > 0,05 |
| 3,2 | > h$_{uv}$ > | -2,8 | und | δ > 0,05 |
| 52,8 | > h$_{uv}$ > | 46,8 | und | δ > 0,05 |
| 67,7 | > h$_{uv}$ > | 61,7 | und | δ > 0,05 |
| 157,1 | > h$_{uv}$ > | 151,1 | und | δ > 0,076 |
| 157,1 | > h$_{uv}$ > | 153,9 | und | δ > 0,05 |
| 163,6 | > h$_{uv}$ > | 157,6 | und | δ > 0,05 |
| 169,8 | > h$_{uv}$ > | 163,8 | und | δ > 0,05 |
| 183,0 | > h$_{uv}$ > | 177,0 | und | δ > 0,05 |

**6.** Bunte Interferenzpigmente nach Anspruch 5, **dadurch gekennzeichnet, dass** die Metalloxidschicht aus $TiO_2$, $ZrO_2$, $ZnO_2$, oder Gemische bzw. Kombinationen davon besteht.

**7.** Bunte Interferenzpigmente nach Anspruch 5 oder 6, **dadurch gekennzeichnet, dass** die Metalloxidschicht aus $TiO_2$ besteht.

**8.** Bunte Interferenzpigmente nach einem oder mehreren der Ansprüche 5 bis 7, **dadurch gekennzeichnet, dass** das $TiO_2$ in der Rutil- oder Anatasmodifikation vorliegt.

**9.** Bunte Interferenzpigmente nach einem oder mehreren der Ansprüche 5 bis 8, **dadurch gekennzeichnet, dass** das transparente Substrat ausgewählt ist aus der Gruppe natürliche oder synthetische Glimmerplättchen, undotierte oder dotierte $SiO_2$-Plättchen undotierte oder dotierte $Al_2O_3$-Plättchen, undotierte oder dotierte Glasplättchen.

**10.** Verfahren zur Herstellung der bunten Interferenzpigmente nach einem oder mehreren der Ansprüche 5 bis 9, **dadurch gekennzeichnet, dass** die Beschichtung der Substrate nass-chemisch oder in der Gasphase erfolgt.

11. Verwendung der bunten Interferenzpigmente nach einem oder mehreren der Ansprüche 5 bis 9 in Farben, Lacken, Autolacken, Autoreparaturlacken, Industrielacken, Pulverlacken, Kunststoffen, Druckfarben und in kosmetischen Formulierungen.

**Claims**

1. System comprising N $\geq$ 3 interference pigments, **characterised in that** the interference pigments have a maximum colour gamut of the system at a $C_{u'v'}$ of $\geq$ 0.05 and a pigment hue angle $h_{u'v'}^{i}$ (i= 1 to N), and the coating layer comprising the pigment has the following hue angle and chroma ranges in the 45°/120° measurement geometry:

$$h_{u'v'} = \arctan\left(\frac{v' - v'_n}{u' - u'_n}\right) \qquad \delta = S_{u'v}/13$$

| | | | | | |
|---|---|---|---|---|---|
| -127.3 | > $h_{uv}$ > | -133.3 | and | $C_{uv}$ > 0.05 | for N = 6 |
| -112.2 | > $h_{uv}$ > | -118.2 | and | $C_{uv}$ > 0.14 | for N = 4, 5, 7, 8 |
| -112.2 | > $h_{uv}$ > | -116.6 | and | $C_{uv}$ > 0.0.5 | for N = 4, 5, 7, 8 |
| -96.4 | > $h_{uv}$ > | -102.4 | and | $C_{uv}$ > 0.05 | for N = 3, 6, 8 |
| -81.1 | > $h_{uv}$ > | -87.1 | and | $C_{uv}$ > 0.125 | for N = 5, 7, 8 |
| -81.1 | > $h_{uv}$ > | -87.1 | and | $C_{uv}$ > 0.05 | for N = 5, 7, 8 |
| -67.4 | > $h_{uv}$ > | -73.4 | and | $C_{uv}$ > 0.12 | for N = 4, 6 |
| -67.4 | > $h_{uv}$ > | -72.7 | and | $C_{uv}$ > 0.05 | for N = 4, 6 |
| -55.6 | > $h_{uv}$ > | -61.6 | and | $C_{uv}$ > 0.05 | for N = 7, 8 |
| -29.5 | > $h_{uv}$ > | -35.5 | and | $C_{uv}$ > 0.05 | for N = 5 |
| -9.8 | > $h_{uv}$ > | -15.8 | and | $C_{uv}$ > 0.062 | for N = 6 |
| -9.8 | > $h_{uv}$ > | -12.7 | and | $C_{uv}$ > 0.05 | for N = 6 |
| -3.4 | > $h_{uv}$ > | -9.4 | and | $C_{uv}$ > 0.057 | for N = 7, 8 |
| -3.4 | > $h_{uv}$ > | -7.8 | and | $C_{uv}$ > 0.05 | for N = 7, 8 |
| 3.2 | > $h_{uv}$ > | -2.8 | and | $C_{uv}$ > 0.05 | for N = 3 |
| 52.8 | > $h_{uv}$ > | 46.8 | and | $C_{uv}$ > 0.05 | for N = 4 |
| 67.7 | > $h_{uv}$ > | 61.7 | and | $C_{uv}$ > 0.05 | for N = 5, 6, 7, 8 |
| 157.1 | > $h_{uv}$ > | 151.1 | and | $C_{uv}$ > 0.076 | for N = 7, 8 |
| 157.1 | > $h_{uv}$ > | 153.9 | and | $C_{uv}$ > 0.05 | for N = 7, 8 |
| 163.6 | > $h_{uv}$ > | 157.6 | and | $C_{uv}$ > 0.05 | for N = 3, 4, 6 |
| 169.8 | > $h_{uv}$ > | 163.8 | and | $C_{uv}$ > 0.05 | for N = 5 |
| 183.0 | > $h_{uv}$ > | 177.0 | and | $C_{uv}$ > 0.05 | for N = 7, 8 |

2. System comprising N $\geq$ 3 interference pigments according to Claim 1, **characterised in that** the interference pigments are based on flake-form substrates.

3. System comprising N $\geq$ 3 interference pigments according to Claim 1 or 2, **characterised in that** the substrates are natural or synthetic mica flakes, undoped or doped $SiO_2$ flakes, undoped or doped $Al_2O_3$ flakes, undoped or doped glass flakes.

4. System comprising N$\geq$3 interference pigments according to one or more of Claims 1 to 3, **characterised in that** the interference pigments are $TiO_2$-coated flakes.

5. Coloured interference pigments comprising one or more colourless metal-oxide layers on a transparent substrate, **characterised in that** the coating layer comprising the pigment has one of the following hue angles and chromas in the 45°/120° measurement geometry:

$$h_{u'v'} = \arctan \left( \frac{v' - v'_n}{u' - u'_n} \right) \qquad \delta = S_{u'v}/13$$

| | | | | |
|---|---|---|---|---|
| -127.3 | > $h_{uv}$ > | -133.3 | and | $\delta$ > 0.05 |
| -112.2 | > $h_{uv}$ > | -118.2 | and | $\delta$ > 0.14 |
| -112.2 | > $h_{uv}$ > | -116.6 | and | $\delta$ > 0.05 |
| -96.4 | > $h_{uv}$ > | -102.4 | and | $\delta$ > 0.05 |
| -81.1 | > $h_{uv}$ > | -87.1 | and | $\delta$ > 0.125 |
| -81.1 | > $h_{uv}$ > | -87.1 | and | $\delta$ > 0.05 |
| -67.4 | > $h_{uv}$ > | -73.4 | and | $\delta$ > 0.12 |
| -67.4 | > $h_{uv}$ > | -72.7 | and | $\delta$ > 0.05 |
| -55.6 | > $h_{uv}$ > | -61.6 | and | $\delta$ > 0.05 |
| -29.5 | > $h_{uv}$ > | -35.5 | and | $\delta$ > 0.05 |
| -9.8 | > $h_{uv}$ > | -15.8 | and | $\delta$ > 0.062 |
| -9.8 | > $h_{uv}$ > | -12.7 | and | $\delta$ > 0.05 |
| -3.4 | > $h_{uv}$ > | -9.4 | and | $\delta$ > 0.057 |
| -3.4 | > $h_{uv}$ > | -7.8 | and | $\delta$ > 0.05 |
| 3.2 | > $h_{uv}$ > | -2.8 | and | $\delta$ > 0.05 |
| 52.8 | > $h_{uv}$ > | 46.8 | and | $\delta$ > 0.05 |
| 67.7 | > $h_{uv}$ > | 61.7 | and | $\delta$ > 0.05 |
| 157.1 | > $h_{uv}$ > | 151.1 | and | $\delta$ > 0.076 |
| 157.1 | > $h_{uv}$ > | 153.9 | and | $\delta$ > 0.05 |
| 163.6 | > $h_{uv}$ > | 157.6 | and | $\delta$ > 0.05 |
| 169.8 | > $h_{uv}$ > | 163.8 | and | $\delta$ > 0.05 |
| 183.0 | > $h_{uv}$ > | 177.0 | and | $\delta$ > 0.05 |

6. Coloured interference pigments according to Claim 5, **characterised in that** the metal-oxide layer consists of $TiO_2$, $ZrO_2$, $ZnO_2$, or mixtures or combinations thereof.

7. Coloured interference pigments according to Claim 5 or 6, **characterised in that** the metal-oxide layer consists of $TiO_2$.

8. Coloured interference pigments according to one or more of Claims 5 to 7, **characterised in that** the $TiO_2$ is in the rutile or anatase modification.

9. Coloured interference pigments according to one or more of Claims 5 to 8, **characterised in that** the transparent substrate is selected from the group natural or synthetic mica flakes, undoped or doped $SiO_2$ flakes, undoped or doped $Al_2O_3$ flakes, undoped or doped glass flakes.

10. Process for the preparation of the coloured interference pigments according to one or more of Claims 5 to 9, **characterised in that** the coating of the substrates is carried out by wet-chemical methods or in the gas phase.

11. Use of the coloured interference pigments according to one or more of Claims 5 to 9 in paints, coatings, automotive paints, automotive refinish paints, industrial coatings, powder coatings, plastics, printing inks and in cosmetic formulations.

**Revendications**

1. Système comprenant N $\geq$ 3 pigments d'interférence, **caractérisé en ce que** les pigments d'interférence présentent une gamme de couleurs maximum du système à un $C_{u'v'} \geq 0{,}05$ et un angle de nuance de pigment $h_{u'v'}{}^i$ (i= 1 à N), et la couche de revêtement comprenant le pigment présente les plages d'angle de nuance et de chroma qui suivent pour la géométrie de mesure 45˚/120˚:

$$h_{u'v'} = \arctan\left(\frac{v'-v'_n}{u'-u'_n}\right) \qquad\qquad \delta = S_{u'v'}/13$$

| | | | | | |
|---|---|---|---|---|---|
| -127,3 | > $h_{uv}$ > | -133,3 | et | $C_{uv} > 0,05$ | pour N = 6 |
| -112,2 | > $h_{uv}$ > | -118,2 | et | $C_{uv} > 0,14$ | pour N = 4, 5, 7, 8 |
| -112,2 | > $h_{uv}$ > | -116,6 | et | $C_{uv} > 0,05$ | pour N = 4, 5, 7, 8 |
| -96,4 | > $h_{uv}$ > | -102,4 | et | $C_{uv} > 0,05$ | pour N = 3, 6, 8 |
| -81,1 | > $h_{uv}$ > | -87,1 | et | $C_{uv} > 0,125$ | pour N = 5, 7, 8 |
| -81,1 | > $h_{uv}$ > | -87,1 | et | $C_{uv} > 0,05$ | pour N = 5, 7, 8 |
| -67,4 | > $h_{uv}$ > | -73,4 | et | $C_{uv} > 0,12$ | pour N = 4, 6 |
| -67,4 | > $h_{uv}$ > | -72,7 | et | $C_{uv} > 0,05$ | pour N = 4, 6 |
| -55,6 | > $h_{uv}$ > | -61,6 | et | $C_{uv} > 0,05$ | pour N = 7, 8 |
| -29,5 | > $h_{uv}$ > | -35,5 | et | $C_{uv} > 0,05$ | pour N = 5 |
| -9,8 | > $h_{uv}$ > | -15,8 | et | $C_{uv} > 0,062$ | pour N = 6 |
| -9,8 | > $h_{uv}$ > | -12,7 | et | $C_{uv} > 0,05$ | pour N = 6 |
| -3,4 | > $h_{uv}$ > | -9,4 | et | $C_{uv} > 0,057$ | pour N = 7, 8 |
| -3,4 | > $h_{uv}$ > | -7,8 | et | $C_{uv} > 0,05$ | pour N = 7, 8 |
| 3,2 | > $h_{uv}$ > | -2,8 | et | $C_{uv} > 0,05$ | pour N = 3 |
| 52,8 | > $h_{uv}$ > | 46,8 | et | $C_{uv} > 0,05$ | pour N = 4 |
| 67,7 | > $h_{uv}$ > | 61,7 | et | $C_{uv} > 0,05$ | pour N = 5, 6, 7, 8 |
| 157,1 | > $h_{uv}$ > | 151,1 | et | $C_{uv} > 0,076$ | pour N = 7, 8 |
| 157,1 | > $h_{uv}$ > | 153,9 | et | $C_{uv} > 0,05$ | pour N = 7, 8 |
| 163,6 | > $h_{uv}$ > | 157,6 | et | $C_{uv} > 0,05$ | pour N = 3, 4, 6 |
| 169,8 | > $h_{uv}$ > | 163,8 | et | $C_{uv} > 0,05$ | pour N = 5 |
| 183,0 | > $h_{uv}$ > | 177,0 | et | $C_{uv} > 0,05$ | pour N = 7, 8 |

2. Système comprenant N ≥ 3 pigments d'interférence selon la revendication 1, **caractérisé en ce que** les pigments d'interférence sont basés sur des substrats sous forme de flocons.

3. Système comprenant N ≥ 3 pigments d'interférence selon la revendication 1 ou 2, **caractérisé en ce que** les substrats sont des flocons de mica naturels ou synthétiques, des flocons de $SiO_2$ non dopés ou dopés, des flocons d'$Al_2O_3$ non dopés ou dopés, des flocons de verre non dopés ou dopés.

4. Système comprenant N ≥ 3 pigments d'interférence selon une ou plusieurs des revendications 1 à 3, **caractérisé en ce que** les pigments d'interférence sont des flocons revêtus de $TiO_2$.

5. Pigments d'interférence couleur comprenant une ou plusieurs couches d'oxyde métallique incolores sur un substrat transparent, **caractérisé en ce que** la couche de revêtement comprenant le pigment comprend l'un des angles de nuance et l'un des chromas qui suivent pour la géométrie de mesure 45˚/120˚ :

$$h_{u'v'} = \arctan\left(\frac{v'-v'_n}{u'-u'_n}\right) \qquad\qquad \delta = S_{u'v'}/13$$

| | | | | |
|---|---|---|---|---|
| -127,3 | > $h_{uv}$ > | -133,3 | et | $\delta > 0,05$ |
| -112,2 | > $h_{uv}$ > | -118,2 | et | $\delta > 0,14$ |
| -112,2 | > $h_{uv}$ > | -116,6 | et | $\delta > 0,05$ |
| -96,4 | > $h_{uv}$ > | -102,4 | et | $\delta > 0,05$ |
| -81,1 | > $h_{uv}$ > | -87,1 | et | $\delta > 0,125$ |

(suite)

$$ h_{u'v'} = \arctan \left( \frac{v' - v'_n}{u' - u'_n} \right) \qquad \delta = S_{u'v}/13 $$

| | | | | |
|---|---|---|---|---|
| -81,1 | > $h_{uv}$ > | -87,1 | et | $\delta > 0{,}05$ |
| -67,4 | > $h_{uv}$ > | -73,4 | et | $\delta > 0{,}12$ |
| -67,4 | > $h_{uv}$ > | -72,7 | et | $\delta > 0{,}05$ |
| -55,6 | > $h_{uv}$ > | -61,6 | et | $\delta > 0{,}05$ |
| -29,5 | > $h_{uv}$ > | -35,5 | et | $\delta > 0{,}05$ |
| -9,8 | > $h_{uv}$ > | -15,8 | et | $\delta > 0{,}062$ |
| -9,8 | > $h_{uv}$ > | -12,7 | et | $\delta > 0{,}05$ |
| -3,4 | > $h_{uv}$ > | -9,4 | et | $\delta > 0{,}057$ |
| -3,4 | > $h_{uv}$ > | -7,8 | et | $\delta > 0{,}05$ |
| 3,2 | > $h_{uv}$ > | -2,8 | et | $\delta > 0{,}05$ |
| 52,8 | > $h_{uv}$ > | 46,8 | et | $\delta > 0{,}05$ |
| 67,7 | > $h_{uv}$ > | 61,7 | et | $\delta > 0{,}05$ |
| 157,1 | > $h_{uv}$ > | 151,1 | et | $\delta > 0{,}076$ |
| 157,1 | > $h_{uv}$ > | 153,9 | et | $\delta > 0{,}05$ |
| 163,6 | > $h_{uv}$ > | 157,6 | et | $\delta > 0{,}05$ |
| 169,8 | > $h_{uv}$ > | 163,8 | et | $\delta > 0{,}05$ |
| 183,0 | > $h_{uv}$ > | 177,0 | et | $\delta > 0{,}05$ |

**6.** Pigments d'interférence couleur selon la revendication 5, **caractérisés en ce que** la couche d'oxyde métallique est constituée par $TiO_2$, $ZrO_2$, $ZnO_2$, ou des mélanges ou combinaisons afférentes.

**7.** Pigments d'interférence couleur selon la revendication 5 ou 6, **caractérisés en ce que** la couche d'oxyde métallique est constituée par $TiO_2$.

**8.** Pigments d'interférence couleur selon une ou plusieurs des revendications 5 à 7, **caractérisés en ce que** le $TiO_2$ est selon la modification rutile ou anatase.

**9.** Pigments d'interférence couleur selon une ou plusieurs des revendications 5 à 8, **caractérisés en ce que** le substrat transparent est choisi parmi le groupe constitués par des flocons de mica naturels ou synthétiques, des flocons de $SiO_2$ non dopés ou dopés, des flocons d'$Al_2O_3$ non dopés ou dopés, des flocons de verre non dopés ou dopés.

**10.** Procédé pour la préparation des pigments d'interférence couleur selon une ou plusieurs des revendications 5 à 9, **caractérisé en ce que** le revêtement des substrats est mis en oeuvre au moyen de procédés chimiques par voie humide ou en phase gazeuse.

**11.** Utilisation des pigments d'interférence couleur selon une ou plusieurs des revendications 5 à 9 dans des peintures, des revêtements, des peintures d'automobile, des peintures de carrossier-peintre d'automobile, des revêtements industriels, des revêtements pulvérulents, des matières plastiques, des encres d'impression et dans des formulations cosmétiques.

<u>Abb. 1:</u> Theoretische Kurve E(u',v') für optische Weglängen 10 nm < nd <
1000 nm bei Lichteinfall unter 45° zur Flächennormalen (dünne Linie)
und dazugehörige Enveloppenkurve (dicke Linie)

<u>Abb.2:</u> Gamut und Farbkkordinaten u',v' der Pigmente 1- 8 aus Beispiel 4, Tabelle 3
(durchgehende Kurve), Interferenzpigmente dem Stand der Technik, wie auf S.
16 aufgeführt (gestrichelte Gamutkurve), die beiden Einzelpunkte sind die Farbkoordinaten der kommerziellen Pigmente aus Beispiel 5, die sich alle bezüglich
ihrer Farborte durch Mischung der erfindungsgemäßen Pigmente 1 -8 nachstellen lassen. Die Markierung - leerer Kreis - repräsentiert den Unbuntpunkt.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19941607 A1
- WO 2004061012 A2
- EP 0882099 B1
- DE 1467468
- DE 1959988
- DE 2009566
- DE 2214545
- DE 2215191
- DE 2244298
- DE 2313331
- DE 2522572
- DE 3137808
- DE 3137809
- DE 3151343
- DE 3151354
- DE 3151355
- DE 3211602
- DE 3235017
- EP 0045851 A
- EP 0106235 A
- EP 0882099 A
- DE PS2215191 C
- DE OS3151354 A
- DE OS3235017 A
- DE 3334598 A
- DE 4030727 A1
- EP 0649886 A2
- WO 9729059 A
- WO 9957204 A
- US 5759255 A
- EP 0090259 A
- EP 0634459 A
- WO 9632446 A
- US 5571851 A
- WO 0192425 A

**In der Beschreibung aufgeführte Nicht-Patentliteratur**

- **Vasicek, A.** Optics of Thin Films. North Holland Pub. Comp, 1960
- **J.J. Ponjeé.** *Philips Technical Review,* vol. 44 (3), 81
- **P.H. Harding ; J.C. Berg.** *J. Adhesion Sci. Technol.,* vol. 11 (4), 471-493